# EUROPEAN PATENT SPECIFICATION

(11) **EP 0 889 860 B1**
(45) Date of publication and mention of the grant of the patent: **10.05.2000**
(21) Application number: 97908283.1
(22) Date of filing: 21.03.1997
(51) Int. Cl.: C04B 24/32, C08G 65/32

(54) **CEMENT ADDITIVES**
ZEMENTZUSÄTZE
ADDITIFS POUR CIMENT

(30) Priority: 26.03.1996 US 621669; 10.12.1996 US 762581
(43) Date of publication of application: 13.01.1999
(73) Proprietor: ARCO Chemical Technology, L.P., Greenville, Delaware 19807 (US)
(72) Inventor: SHAWL, Edward, Wallingford, PA 19086 (US)
(74) Representative: Smaggasgale, Gillian Helen
(86) International application number: EP9701445
(87) International publication number: WO9735814

(56) References cited:
- EP-A- 0 271 435
- EP-A- 0 639 592
- FR-A- 2 706 447
- US-A- 5 436 314
- CHEMICAL ABSTRACTS, vol. 103, no. 26, 30 December 1985 Columbus, Ohio, US; abstract no. 219928n, XP000061248 & JP 60 161 363 A (KAO CORP.) 23 August 1985
- CHEMICAL ABSTRACTS, vol. 105, no. 10, 8 September 1986 Columbus, Ohio, US; abstract no. 84233a, XP002033829 & JP 61 031 333 A (KAO CORP.) 13 February 1986

## Description

### Field of the Invention

The present invention relates to the use of polymeric additives comprised of the reaction product of a carboxylic acid polymer such as polyacrylic acid and at least one polyether of one or more C₂-C₄ epoxides as additives for cement. The invention also pertains to cement compositions containing these additives. The additives function as water reducers and super plasticizers.

### Description of the Prior Art

Additives for cement to increase the fluidity of cement paste, mortars and concretes have been known and in use for many years. These additives are also known as water reducers because they allow less water to be used in a mortar or concrete without loss of slump (a measure of consistency or workability). This class of cement additives permits the use of less water to obtain the same slump, or the attainment of a higher slump at a given water content, or the use of less portland cement to realize the same compressive strength. The performance requirements for water reducing admixtures are specified in ASTM Method C494-92, "Standard Specifications for Chemical Admixtures for Concrete."

In ASTM C494-92, a water reducing admixture is defined as an admixture that reduces the quantity of mixing water required to produce concrete of a given consistency by at least 5%.

A high range water reducing admixture, also known as a superplasticizer, reduces the quantity of mixing water required to produce concrete of a given consistency by 12% or greater. Commercial water reducing admixtures include lignin sulfonates and naphthalene sulfonate-formaldehyde condensates. More recently, new classes of flow enhancers or water reducers have been described. U.S. Patent 4,814,014 describes a cement composition containing a graft co-polymer containing a polymeric backbone moiety and polymeric side chain moieties wherein one of the polymeric moieties is a polyether moiety and the other is a non-polyether formed by polymerization of ethylenically unsaturated monomers. U.S. Patent 5,393,343 describes a cement composition containing an imidized acrylic polymer made, for example, by reacting a polyacrylic acid of 2000 molecular weight with a polyethylene polypropylene oxide polymer of 2000 molecular weight terminated at one end by a primary amine group and at the other end by a methyl group.

The compositions of the prior art have not, however, been entirely satisfactory leaving much room for improvement.

### BRIEF DESCRIPTION OF THE INVENTION

In accordance with the present invention, it has been found that the reaction products of certain carboxylic acid polymers and certain polyethers are unexpectedly effective as water reducing additives or superplasticizers in cement. In contrast to other conventional superplasticizers based on polyethers, the reaction products of the present invention perform well even at dosages as low as 0.1 weight % on cement, do not strongly entrain air, and are not substantially reduced in performance even when used in coordination with a defoamer. Additionally, at least in one embodiment of the invention the time to total slump loss is much longer using the additive of the present invention as compared to conventional superplasticizers. This is an important advantage, as the cement thereby remains workable over a greater period. A cementitious composition may set up before the composition is in place if sufficient slump cannot be sustained over a sufficiently long period, with unfortunate consequences.

In accordance with a preferred embodiment of the present invention, a mixture of certain polyethers is employed. By the use of such a mixture, a reduction of air entrainment in the cement is achievable as compared with the use of a single polyether as described above.

### DESCRIPTION OF THE PREFERRED EMBODIMENTS

The carboxylic acid polymers utilized in the preparation of the cement additives of the invention are comprised, in whole or in part, of one or more polymerizable acid monomers characterized by the presence of at least one polymerizable ethylenically unsaturated group in conjugation with a carboxylic acid, carboxylic anhydride or carboxylic ester group. "Acid" in this context thus refers to any moiety capable of functioning as an equivalent to or precursor of a free carboxylic acid group. Such monomers include monomers corresponding to the structure 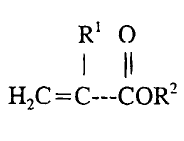 wherein R¹ and R² are each independently hydrogen or C₁-C₄ alkyl (e.g., methyl, ethyl, propyl, butyl). Other suitable monomers include cyclic unsaturated anhydrides and unsaturated dicarboxylic acids and C₁-C₄ alkyl esters thereof. Preferred acid monomers include, but are not limited to, acrylic acid, methacrylic acid, methyl methacrylate, methyl acrylate, maleic acid, maleic anhydride and combinations thereof. The carboxylic acid may be present in salt form, i.e., where R² is replaced with alkali metal, alkaline earth metal, ammonium, or the like. The carboxylic acid polymer thus may be in acid, partially neutralized, or fully neutralized salt form.

In certain embodiments of the invention, the polymer is comprised of repeating units having the structure 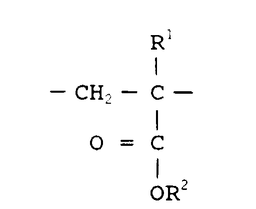 wherein R¹ is H or C₁-C₄ alkyl and R² is H, C₁-C₄ alkyl, alkali metal (e.g., Na,K), alkaline earth metal, or ammonium (e.g., NH₄, mono-, di-, or trialkylammonium, or quaternary ammonium); or 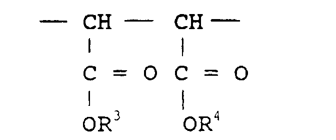 wherein R³ and R⁴ are the same or different and have the same meaning as R² above; or

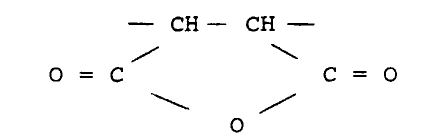

In one embodiment of the invention, the carboxylic acid polymer consists essentially of the acid monomer(s) in polymerized form (i.e., the acid monomer may comprise up to 100% of the polymer). However, satisfactory results may also be obtained even where the acid monomer is copolymerized with a different type of polymerizable monomer such as ethylene, or other ethylenically unsaturated compound. Preferably, however, at least 25 mole % of the repeating units in the polymer are repeating units of the acid monomer. Acrylic acid homopolymer is particularly useful in the present invention. Aqueous solutions of poly(acrylic acid) containing from 30 to 70% solids and having molecular weights of between 1000 and 4,000,000 are available from commercial sources such as BASF (under the trademark "Sokalan PA") and Aldrich Chemical Company. Poly(acrylic acid) is also commercially available in solid form.

In another preferred embodiment of the invention, a copolymer of maleic acid and acrylic acid is utilized. Such materials are available in solid or aqueous solution form from BASF under the trademark Sokalan CP (molecular weight = 3000 to 70,000).

Other examples of carboxylic acid polymers suitable for use in the present invention include, but are not limited to, poly(ethylene-co-acrylic acid), poly(ethylene-co-methacrylic acid), poly(ethylene-co-maleic anhydride), and poly(methylmethacrylate-co-methacrylic acid).

The precise molecular weight of the carboxylic acid polymer is not particularly critical and may be varied as desired to control the properties of the resulting cement additive. Typically, however, the polymer has a number average molecular weight of from 500 to 2,000,000. In one preferred embodiment of the invention, the number average molecular weight ranges from 500 to 10,000.

In one embodiment of the invention, the other reactant utilized in the synthesis of the cement additives of the present invention is a polyether comprised of, in polymerized form, one or more C₂-C₄ epoxides. The polyether may thus be any homopolymer or copolymer having repeating units linked by ether linkages with two carbon atoms separating each ether linkage.

Preferred polyethers are polyethers containing one or more terminal hydroxyl groups. Preferably, however, the polyether does not have a functionality greater than 2. That is, the use of polyethers having one or two terminal hydroxyl groups is desirable. Monofunctional polyethers are most preferred for use since problems with undesirable gelling of the reaction product are thereby minimized. The precise molecular weight of the polyether reactant is not considered critical, but may typically range from 500 to 10,000 (number average). Suitable polyethers thus include, but are not limited to, mono- and di- functional polypropylene glycols, polyethylene glycols, and ethylene oxide-propylene oxide copolymers. The composition and molecular weight of the polyether are desirably selected such that the cement additive obtained from the polyether is water-soluble.

In a second embodiment of the invention, a mixture of polyethers is employed, each of which is comprised of, in polymerized form, one or more C₂-C₄ epoxides. One polyether is monofunctional (i.e., contains one hydroxyl group per molecule), while the other polyether is difunctional (i.e., contains two hydroxyl groups per molecule). The polyethers may be derived from the same C₂-C₄ epoxide or mixture of C₂-C₄ epoxides; alternatively, different C₂-C₄ epoxides may be used to prepare the monofunctional and difunctional polyethers.

The precise molecular weights of the polyether reactants are not considered critical, but may typically range from 500 to 20,000 (number average). The compositions and molecular weights of the polyethers in the mixture are desirably selected such that the cement additive obtained from the polyether is water-soluble. It is desirable to control the amount of difunctional polyether relative to monofunctional polyether in order to avoid excessive crosslinking, which tends to reduce the solubility of the product derived therefrom in water. The weight ratio of monofunctional to difunctional polyether thus is typically maintained in the range 3:1 to 25:1.

For both of the above-mentioned embodiments of the invention, preferred C₂-C₄ epoxides include propylene oxide, ethylene oxide, and mixtures thereof. For example, the mole ratio of oxyethylene to oxypropylene repeating units in the polyethers may vary from 1:99 to 99:1. Generally speaking, the incorporation of higher proportions of oxyethylene repeating units in the polyether mixture will tend to increase the water solubility of the resulting cement additive. However, the use of oxyalkylene repeating units derived from substituted epoxides such as propylene oxide and 1-butene oxide tends to increase the susceptibility of the polyethers to undergo the desired partial cleavage during reaction with the carboxylic acid polymer. The polyether may additionally contain repeating units other than those derived from C₂-C₄ epoxides. Copolymers of C₂-C₄ epoxides with other cyclic ethers such as oxetanes, oxolanes (e.g., tetrahydrofuran), and the like may be used to advantage, for example. In one preferred aspect of the embodiment of this invention which employs a mixture of polyethers, the difunctional polyether is a homopolymer of propylene oxide (i.e., polypropylene glycol).

Polyethers corresponding to the foregoing description are well-known in the art and may be readily obtained from a number of commercial sources. Methods for their preparation include, for example, the base-catalyzed or double metal cyanide complex-catalyzed reaction of C₂-C₄ epoxide(s) with a suitable initiator having one or two active hydrogen atoms. In the above-mentioned second embodiment of the invention, the monofunctional polyether may be obtained by polymerizing a C₂-C₄ epoxide onto a mono-functional initiator (i.e., a compound having a single active hydrogen atom such as a mono-alcohol) such as a C₁-C₁₀ aliphatic alcohol (e.g., methanol, ethanol, n-propanol), glycol ether (e.g., propylene glycol monomethyl ether, diethylene glycol mono-t-butyl ether, tripropylene glycol monomethyl ether) or the like. The difunctional polyether may be prepared by polymerizing a C₂-C₄ epoxide onto a difunctional initiator (i.e., a compound having two active hydrogen atoms such as a di-alcohol) such as a glycol (e.g., propylene glycol, ethylene glycol, 1,4-butanediol and the like) and oligomers thereof (e.g., tripropylene glycol, diethylene glycol). The polyethers may also be recycled materials recovered by glycolysis or hydrolysis from a polyurethane foam or the like.

The precise relative proportions of the foregoing reactants are not critical, except that the number of equivalents of polyether or polyether mixture reacted should be less than the number of equivalents of the carboxyl groups in the carboxylic acid polymer. That is, the number of hydroxyl groups in the former reactant per carboxyl group in the latter reactant is selected to be less than 1, more preferably, less than 0.5, most preferably, less than 0.3. The equivalent ratio of carboxyl groups in the carboxylic acid polymer to hydroxyl groups in the polyether or polyether mixture is preferably from 20:1 to 2:1.

The aforedescribed polyether, or polyether mixture, and carboxylic acid polymer are reacted under conditions effective to achieve partial cleavage of the polyether or polyethers and esterification of the polyether or polyethers and cleavage products thereof by the latter reactant. While the precise mechanism of said reaction and chemical structure of the resulting product are not known, it is believed that cleavage of some, but not all, of the ether linkages of the polyether or polyethers takes place and that the resulting cleavage products ultimately participate in the desired esterification of the acid groups originally present in the carboxylic acid polymer. Where the polymerized acid monomer is present in alkyl ester form (i.e., R² in the aforedescribed structure is C₁-C₄ alkyl), the esterification process may be alternatively described as interesterification wherein the C₁-C₄ alkyl group is displaced by the polyether or cleavage products thereof. It is preferred that the majority of the ether linkages in the starting polyethers remain uncleaved. In one embodiment of the invention, only from about 1 to 25% of such linkages undergo cleavage.

The desired reaction of the polyether and carboxylic acid polymer is catalyzed by a strong protic acid. Suitable protic acids are those substances having a pKa less than 0. Generally, the acid will be a stronger acid than a carboxylic acid. Preferred strong protic acids include arylsulfonic acids, alkylsulfonic acids, and sulfonic acid ion exchange resins. Inorganic as well organic acids may be utilized; the acid may be soluble or insoluble in the reaction mixture. Other suitable acids are hydrogen halides, halosulfonic acids, tetrafluoroboric acid, heteropolyacids, and sulfuric acids. Mixtures of different acids can be used. Illustrative examples of acids useful in the present invention include, but are not limited to, p-toluene sulfonic acid, trifluoromethanesulfonic acid, methane sulfonic acid, hydrochloric acid, phosphotungstic acid, "Nafion" resins, "Amberlyst 15" resin, and the like. The protic acid may be added in salt form (e.g., zinc triflate), such that the acid is generated in situ by interaction with the carboxylic acid polymer.

The protic acid is used in an amount effective to promote the aforedescribed cleavage and esterification reactions. The preferred amount to be employed depends upon many factors, including the desired reaction rate, the types of reactants and catalyst used, reaction temperature, and other considerations. Generally, suitable amounts of protic acid are within the range of about 0.01 to 1 weight percent based on the quantity of polyether or polyether mixture to be reacted.

The process of the invention is conveniently performed by combining the polyether or polyether mixture, carboxylic acid polymer, and strong protic acid catalyst in any desired order or manner and heating the mixture at a temperature sufficient to cause the desired cleavage and esterification to proceed at sufficiently rapid rates. The progress of the esterification reaction can be followed by measuring the acid number, which will decrease as esterification proceeds, by conventional wet chemical analytical techniques. Generally, it will be advantageous to conduct said reaction until from 1 to 50% (more typically, 2 to 20%) of the carboxyl groups initially present in the carboxylic acid polymer are esterified.

Where the polyether or mixture of polyethers is comprised of repeating oxypropylene units derived from propylene oxide, the extent of polyether cleavage may be conveniently checked by monitoring the level of head-to-head ether linkages in the polyether by NMR. Such head-to-head linkages are apparently more susceptible to cleavage than head-to-tail linkages. The extent of reaction (i.e., esterification plus cleavage) may also be estimated by measurement of the acid number. When a desirable level of esterification and cleavage is achieved, the acid number will typically be less than the theoretical acid number (calculated from the relative proportions and functionalities of the starting materials) which would be attained if esterification of the original polyethers, but not any cleavage products thereof, had been completed.

The temperature selected should be sufficiently high so as to promote both the desired cleavage and esterification. While the minimum temperature required for such purpose will vary depending upon a number of factors, it has been found that where the polyether or mixture of polyethers is derived in whole or in part from propylene oxide, the carboxylic acid polymer is derived in whole or in part from acrylic acid, and the strong protic acid is a sulfonic acid, temperatures in excess of 140°C (more preferably, 150°C to 250°C) are needed. In one embodiment of the invention, the reaction mixture is first heated to a somewhat lower temperature (e.g., 75°C to 140°C) for a period of time sufficient to accomplish substantial esterification (but not a significant amount of cleavage) of the initially charged polyether or polyether mixture, followed by heating at a temperature effective to cause polyether cleavage.

Esterification may be favored by removing the water or other by-products formed as a result of esterification from the reaction mixture (as well as any water present in the reactants initially) by appropriate means such as distillation or the like. Application of vacuum or an inert gas sparge may be helpful.

Once the appropriate degree of esterification and cleavage has been attained (typically, from about 0.5 to 18 hours), purification or further modification of the reaction product may be performed prior to its use as a cement additive. For example, the strong protic acid may be removed by any suitable method such as filtration, neutralization, or the like. The residual carboxylic acid groups in the additive may be either left in the acid form, or, if so desired, converted in whole or part to the salt form by reaction with a suitable source of alkali metal (e.g., sodium hydroxide, potassium hydroxide), alkaline earth metal (e.g., calcium hydroxide), ammonium (e.g., ammonia, alkyl amines such as triethanol amine and triisopropanol amine) or the like. The cation in the resulting salt thus may be an alkali metal cation. Ammonium as well as alkaline earth metal cations may also serve as the cation for such purpose. If the acid monomer used to prepare the carboxylic acid polymer was in anhydride form, some or all of the anhydride groups which may still be present in the polymer after reaction with the polyether may be converted into free acid or salt form by hydrolysis or other such means using methods conventional in the art. Cleavage or hydrolysis of the ester linkages between the polyether and the carboxylic acid polymer should, however, be minimized by careful selection of the conversion conditions utilized.

The cements with which the additives of the invention may be used are hydraulic cements, meaning cements which, when made into a paste with water, set and harden as a result of chemical reactions between the water and cement. Suitable cements include ordinary, quick-hardening, and moderate-heat portland cements, alumina cement, blast-furnace slag cement, and flash cement. Of these, portland cements of the ordinary and quick-hardening types are particularly desirable.

The quantity of additive used may vary with factors such as the degree of esterification and polyether cleavage attained and the relative amount of polyether or polyether mixture reacted with the monocarboxylic acid polymer. The additive quantity to be used in accordance with the invention is usually in the range of 0.01-10%, preferably 0.05 to 2%, based on the weight of dry cement. The quantity of water to be used for setting the cement is not critical; generally weight ratios of water to cement in the range 0.25:1 to 0.7:1, preferably 0.3:1 to 0.5:1 are satisfactory. Where desired, an aggregate such as pebbles, gravel, sand, pumice, or fired pearlite or mixtures thereof may be employed in conventional amounts. The amount of aggregate, for example, may typically comprise from about 40 to 80 percent by volume of the total cement composition.

Advantageously, the additives of this invention, which function as water reducing agents and/or superplasticizers, are used in combination with other known cement additives.

Among the optionally employable additional additives are: conventional hardening accelerators, e.g., metal chlorides such as calcium chloride and sodium chloride, metal sulfates, such as sodium sulfate, and organic amines such as triethanol-amine; ordinary hardening retarders, e.g. alcohols, sugars, starch and cellulose; reinforcing-steel corrosion inhibitors such as sodium nitrate and calcium nitrite; other water reducing agents such as ligninsulfonic acid salts, as well as salts of oxycarboxylic acid and formalin condensates of naphthalenesulfonic acid; air entrainers; other super plasticizers; shrinkage reducing agents; strength enhancers such as triisopropylamine; antifoaming agents such as tributyl phosphate; air entraining admixtures; and the like. The quantity of such an optional ingredient or ingredients is usually 0.1-6% by weight of the cement.

The manner of adding the additive of the invention to the cement may be the same as with ordinary cement admixtures. For example, the additive can be admixed with a suitable proportion of water and the resulting solution is mixed with cement and aggregate. As an alternative, a suitable amount of the additive may be added when cement, aggregate and water are mixed. Another method of introducing the additive is to add it to the dry cement prior to or after grinding. The additive can be added prior to, along with or subsequent to addition of the other components of the cement composition.

The concrete and the like incorporating the additive according to the invention may be applied in conventional ways. For example, it may be trowelled, filled in forms, applied by spraying, or injected by means of a caulking gun. Hardening or curing of the concrete and the like may be by any of the air drying, wet air, water and assisted (steam, autoclave, etc.) curing techniques. If desired, two or more such techniques may be combined. The respective curing conditions may be the same as in the past.

### EXAMPLES

### Example 1

Poly(acrylic acid) (200 g) having a number average molecular weight of approximately 2000 was dissolved in 200g distilled water and then mixed with a monofunctional polyether (800 g) having a number average molecular weight of approximately 2000 and p-toluene sulfonic acid (8g). The monofunctional polyether was prepared by reacting methanol with ethylene oxide and propylene oxide (70:30 molar ratio) in the presence of an alkali metal catalyst. The reaction mixture was heated to 180°C while water was taken overhead and then held at 180°C for 3 hours. The resulting reaction product had an acid number of 77 and was found to be useful as a cement additive to increase the fluidity of cement paste, mortar, or concrete either in acid form or as an aqueous solution of the sodium salt.

### Example 2 (Comparative)

For comparative purposes, the procedure of Example 1 was repeated except that the reaction mixture was heated to 140°C over 4 hours while water was distilled overhead and then held at 140°C for another hour. The resulting reaction product had an acid number of 121, indicating that a lower degree of esterification was achieved than in Example 1.

### Example 3

The reaction products of Examples 1 and 2 were tested in fully neutralized sodim salt form (25% aqueous solutions) in mortar mixes. Slump was measured using a half-size slump cone; air content was determined by ASTM method C185. The results, which are summarized in the following table, indicate that, the sodium salt form of the Example 1 reaction product of was capable, even at low levels, of greatly increasing the slump of the mortar mix at a given water/cement ratio over the slump observed in the absence of the additive. Additionally, the results demonstrate that the water/cement ratio can be reduced by as much as 16% using the additive of the invention while maintaining an equivalent level of slump.

| Additive | Water/cement | wt% additive on dry cement | slump, mm | air, % |
|---|---|---|---|---|
| none | 0.42 | 0 | 20 | 9 |
| none | 0.50 | 0 | 83 | 3 |
| Example 1 | 0.42 | 0.1 | 73 | 10 |
| Example 1 | 0.42 | 0.3 | 97 (94)* | 10 (4)* |
| Example 2 | 0.42 | 0.3 | 25 | 9 |

| | | | | |
|---|---|---|---|---|
| *0.03 weight % tributyl phosphate (defoamer) as additionally present. | | | | |

### Example 4

The reaction product of Example 1 was tested in sodium salt form in a concrete mix. The performance of the reaction product as a cement additive as compared to a control (no additive) and a commercially available superplasticizer is summarized in the following table. Adjusting for the differences in air content, the reaction product of Example 1 gave comparable slump to the commercial superplastizer at one-half the dosage level. The Example 1 reaction product also held its slump with time more effectively than the commercial superplasticizer. Set times with the Example 1 reaction product were comparable to the control (no additive) trials, but compressive strength was much improved.

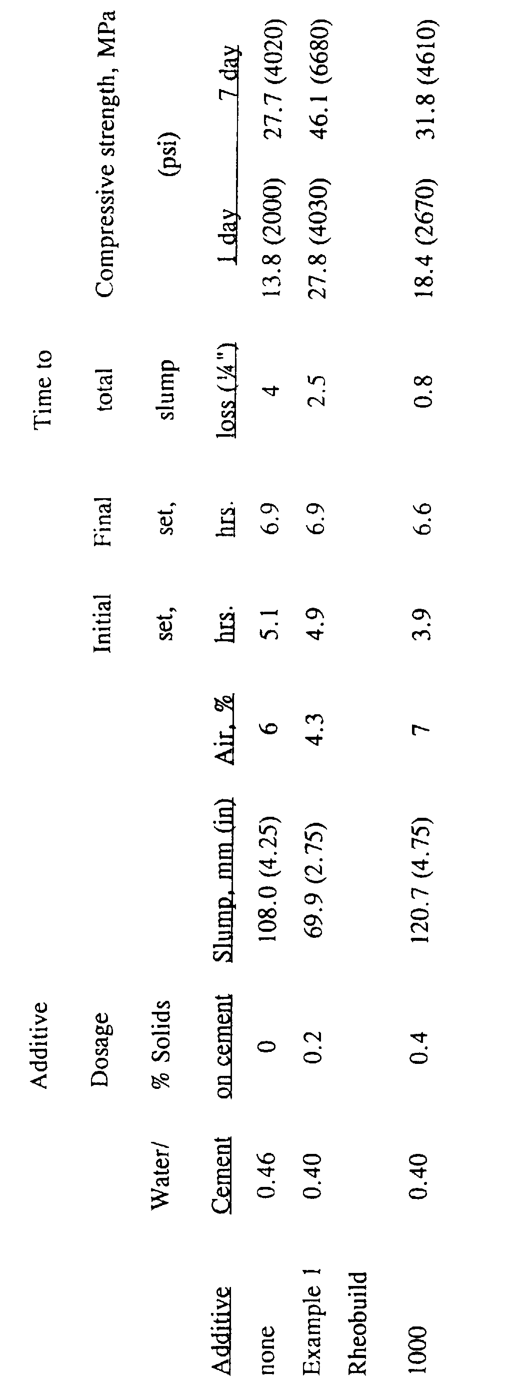

### Example 5

A 3000 molecular weight copolymer of acrylic acid and maleic acid (50g of a 50% aqueous solution was combined with the monofunctional polyether used in Example 1 (100g) and p-toluene sulfonic acid (1g). The reaction mixture was heated to 110°C to drive off water overhead and then held at 150°C for 1 hour. The resulting reaction product had an acid number of 133. The acid number value was somewhat lower than the theoretical acid number (139) calculated based on the relative proportions of the reactants and the assumption that complete esterification (but no cleavage) of the monofunctional polyether had taken place. The lower acid number confirms that partial cleavage of the monofunctional polymer and esterification of the resulting cleavage products by the acrylic acid-maleic acid copolymer occurred. When tested in sodium salt form in accordance with Example 3 (wt % additive on dry cement = 0.3; water/cement ratio = 0.42 ), a slump of 72 mm and an air content of 8.0% were observed. When the foregoing reaction was repeated using a reaction time of 2 hours at 150°C, the product obtained had an acid number of 107 and produced a slump of 65 mm at an air content of 7.2%.

### Example 6

A 2000 molecular weight polyacrylic acid (39g of a 65 % aqueous solution) was combined with "Pluracol W5100N" (a 3600 number average molecular weight n-butyl terminated monofunctional polyether comprised of about 58% ethylene oxide and 42% propylene oxide sold by BASF; 100g) and p-toluene sulfonic acid (lg). The reaction mixture was heated to 110°C to drive off water, then held at 180°C for 2 hours. The resulting reaction product had an acid number of 70. The acid number value was substantially lower than the theoretical acid number (114) calculated based on the relative proportions of the reactants and the assumption that complete esterification of the original monofunctional polyether had taken place. The significantly lower acid number confirms that partial cleavage of the monofunctional polymer and esterification of the cleavage products by the poly(acrylic acid) occurred. When tested in sodium salt form in accordance with Example 3 (0.3 wt % additive; water/cement ratio = 0.42), a slump of 69 and an air content of 10.9% were observed.

### Example 7

This example demonstrates the preparation of a cement additive in accordance with the present invention using a mixture of monofunctional and difunctional polyethers.

A mixture containing (a) 309 g of a 65 weight % aqueous solution of poly(acrylic acid) having a number average molecular weight of approximately 2000 and an acid number, measured for the solution, of 388 mg KOH/g solution, (b) 800 g of a monofunctional polyether ("MPI") having a number average molecular weight of about 2000 corresponding to a hydroxyl number of 28 mg KOH/g, (c) 80 g of a difunctional poly(propylene glycol) having a number average molecular weight of about 4200, and (d) 8.6 g of p-toluene sulfonic acid monohydrate was heated in a 2L reaction kettle equipped with a mechanical stirrer and an overhead takeoff with a condenser. MPI had been prepared by reacting methanol with ethylene oxide and propylene oxide (70:30 weight ratio) in the presence of an alkali metal hydroxide catalyst. The difunctional poly(propylene glycol) had been prepared using a double metal cyanide complex catalyst.

The mixture was heated to 125°C over 2 hours while passing a stream of nitrogen through the kettle and while water was taken overhead. The mixture was thereafter heated at 170°C for 5.5 hours. The product obtained had an acid number of 77 mg KOH/g. This compares to the initial acid number of 112 mg KOH/g for the mixture after the water had been removed and a calculated acid number of 90 mg KOH/g if it is assumed that all of the hydroxyl groups initially present on the MPI and the poly(propylene glycol) had reacted to form esters.

The performance of the product obtained in this manner was evaluated, both in acid form and as an aqueous suspension of the sodium salt, as a cement additive.

### Example 8

This example, like Example 7, also demonstrates the preparation of a cement additive in accordance with the present invention using a mixture of polyethers. In this example, however, a difunctional poly(propylene glycol) having a number average molecular weight of about 4000 prepared using an alkali metal hydroxide catalyst was utilized.

A mixture containing 309 g of 65 weight % aqueous solution of a 2000 molecular weight poly(acrylic acid), 800 g of the MPI monofunctional polyether described in Example 7, and 8.6 g of p-toluene sulfonic acid was heated to 120°C for 3 hours to remove water, then heated for 13 hours at 170°C. Intermediate samples were taken while the mixture was being heated at 170°C, with the sample taken at 7 hours having an acid number of 80 mg KOH/g and the sample taken at 10 hours having an acid number of 73 mg KOH/g. The final product had an acid number of 68 mg KOH/g.

### Examples 9-17

A series of reaction products was prepared using the general procedures and reagents described in Example 7, but utilizing different monofunctional and difunctional polyethers. Details of the preparation are provided in Table 1. In each case, the reaction mixture was heated to about 140°C to drive off the water and then heated to the indicated temperature for the time shown. "MP2" was a monofunctional polyether having a number average molecular weight of about 2000 made by polymerizing a mixture of ethylene oxide and propylene oxide (30:70 weight ratio) onto tripropylene glycol methyl ether using a zinc hexacyanocobaltate complex catalyst. "DP1" was a 2200 number average molecular weight difunctional poly(propylene glycol) made using a zinc hexacyanocobaltate complex catalyst. "DP2" was a 4200 number average molecular weight difunctional poly(propylene glycol) made using a zinc hexacyanocobaltate complex catalyst. "DP3" was an 8200 number average molecular weight difunctional poly(propylene glycol) made using a zinc hexacyanocobaltate complex catalyst. "DP4" was a 4000 number average molecular weight difunctional poly(propylene glycol) made using an alkali metal hydroxide catalyst.

### Example 18 (Comparative)

This example demonstrates the preparation of a cement additive using only a monofunctional polyether.

A mixture was made of 38.5 g of a 65 weight % aqueous solution of poly(acrylic acid) having a number average molecular weight of 2000 with 100 g of monofunctional polyether MP1 and 1 g p-toluene sulfonic acid monohydrate. The mixture was heated to 130°C over 2.5 hours to drive off water and then heated to 170°C - 180°C for 3.5 hours to complete the reaction. Nitrogen flow through the reactor was used to help remove the water, which was then condensed and collected in an overhead receiver.

The resulting product had a final acid number of 69mg KOH/g. This compares to the initial acid number of 121 on a water-free basis assuming no ester formation and an acid number of 99 on a water-free basis if all the hydroxyl groups initially present on the MP1 had reacted to form ester groups.

### Example 19 (Comparative)

A larger batch of product was prepared using the procedures and reactants (including reactant ratios) described in Example 18. The reaction mixture was heated to 180°C-190°C and water was taken overhead.

### Example 20

The reaction products obtained in Examples 7-19 were tested in mortar mixes. Slump was measured using a half-size slump cone; air content was determined using ASTM method C185. The results obtained using Essroc cement are summarized in Table 2. The results obtained using Saylor's cement are summarized in Table 3. To prepare these mixes, the required amounts of water and reaction product (test sample) were weighed into a mixing bowl; 1200 g cement and 2700 g sand (ASTM C778 graded) were added in accordance with the mix procedures of ASTM C305. All of the reaction products tested were capable of greatly increasing the slump of the mortar mix at a given water/cement ratio over the slump observed in the absence of the additive. However, comparative Examples 16, 18 and 19 demonstrate that products made in the absence of the difunctional polyether tend to entrain large amounts of air. While the addition of a defoamer (TBP) generally helped to reduce the amount of entrained air, acceptable entrained air levels were still difficult to achieve. The reaction products obtained in Examples 7-15 and 17, which were prepared using mixtures of monofunctional and difunctional polyethers, did not entrain excess air on their own.

### Example 21

The reaction products of Examples 7 and 19 were tested in a concrete mix. The cement additive performance of these reaction products as compared to a control (no additive) and a commercially available superplasticizer is summarized in Table 4. An air entraining admixture ("AEA") was also utilized in these tests. The ability to control air is necessary to obtain concrete with good freeze-thaw resistance. The reaction product from Example 19 entrained some air on its own. In this instance, no defoamer was needed to keep the entrained air level within the desired range, although varying the cement used or the additive level could result in excessive air entrainment. Additionally, the air void size distribution may not be the same as that provided by a conventional air entraining admixture. The reaction product from Example 7 did not by itself entrain air; however, it was found to be fully compatible with the commercial air entraining admixture so that the desirable level of entrained air could be readily achieved.

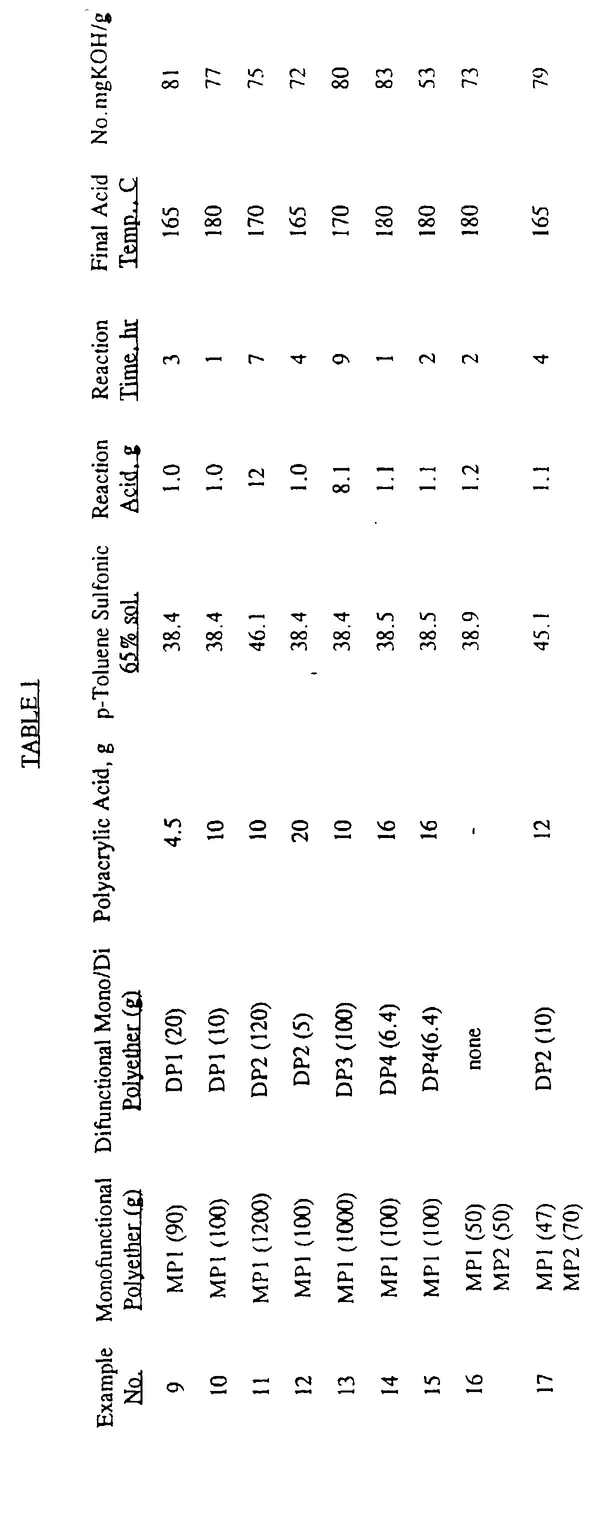

**TABLE 2**

| Additive | Water/ Cement | wt% additive on dry cement | Defoamer (% of additive) | Slump, mm | % Air |
|---|---|---|---|---|---|
| None | 0.50 | ---- | none | 72 | 4 |
| None | 0.48 | ---- | none | 49 | 8 |
| None | 0.42 | ---- | none | 20 | 9 |
| Example 9 | 0.42 | 0.2 | none | 100 | 8 |
| Example 10 | 0.42 | 0.2 | none | 106 | 8 |
| Example 13 | 0.42 | 0.2 | none | 95 | 8 |
| Example 14 | 0.42 | 0.2 | none | 102 | 6 |
| Example 15 | 0.42 | 0.2 | none | 86 | 6 |
| Example 17 | 0.42 | 0.2 | none | 86 | 10 |
| Example 16* | 0.42 | 0.2 | none | 133 | 26 |
| Example 16* | 0.42 | 0.2 | TBP (8%) | 117 | 13 |
| Example 18* | 0.42 | 0.3 | none | 116 | 17 |
| Example 18* | 0.42 | 0.2 | TBP (6%) | 60 | 6 |
| Example 19* | 0.42 | 0.3 | none | 130 | 26 |
| Example 19* | 0.42 | 0.3 | TBP (4%) | 80 | 5 |

| | | | | | |
|---|---|---|---|---|---|
| *comparative TBP =tributyl phosphate | | | | | |

**TABLE 3**

| Additive | Water/ Cement | wt% additive on dry cement | Defoamer % of additive | Slump, mm | % Air |
|---|---|---|---|---|---|
| none | 0.52 | ---- | none | 102 | 2 |
| none | 0.50 | ---- | none | 83 | 4 |
| none | 0.48 | ---- | none | 59 | 5 |
| none | 0.45 | ---- | none | 44 | 6 |
| none | 0.42 | ---- | none | 24 | 8 |
| Example 7 | 0.42 | 0.2 | none | 106 | 7 |
| Example 8 (7hr) | 0.42 | 0.2 | none | 103 | 7 |
| Example 8 (10hr) | 0.42 | 0.2 | none | 112 | 5 |
| Example 8 (13hr) | 0.42 | 0.2 | none | 93 | 6 |
| Example 12 | 0.42 | 0.2 | none | 110 | 7 |
| Example 11 | 0.42 | 0.2 | none | 110 | 5 |
| For the following mixes made with the Example 11 additive, dosage was adjusted to give constant slump at varying w/c ratios | | | | | |
| Example 11 | 0.35 | 0.4 | none | 77 | 8 |
| Example 11 | 0.40 | 0.12 | none | 67 | 8 |
| Example 11 | 0.42 | 0.1 | none | 65 | 7 |
| Example 11 | 0.45 | 0.1 | none | 88 | 6 |
| Example 11 | 0.48 | 0.05 | none | 81 | 6 |
| Example 19* | 0.42 | 0.2 | none | 129 | 21 |
| Example 19* | 0.42 | 0.2 | TBP (5%) | 113 | 6 |
| Example 19* | 0.42 | 0.1 | none | 76 | 12 |
| Example 19* | 0.42 | 0.1 | TBP (7%) | 77 | 7 |

| | | | | | |
|---|---|---|---|---|---|
| *comparative TBP = tributyl phosphate | | | | | |

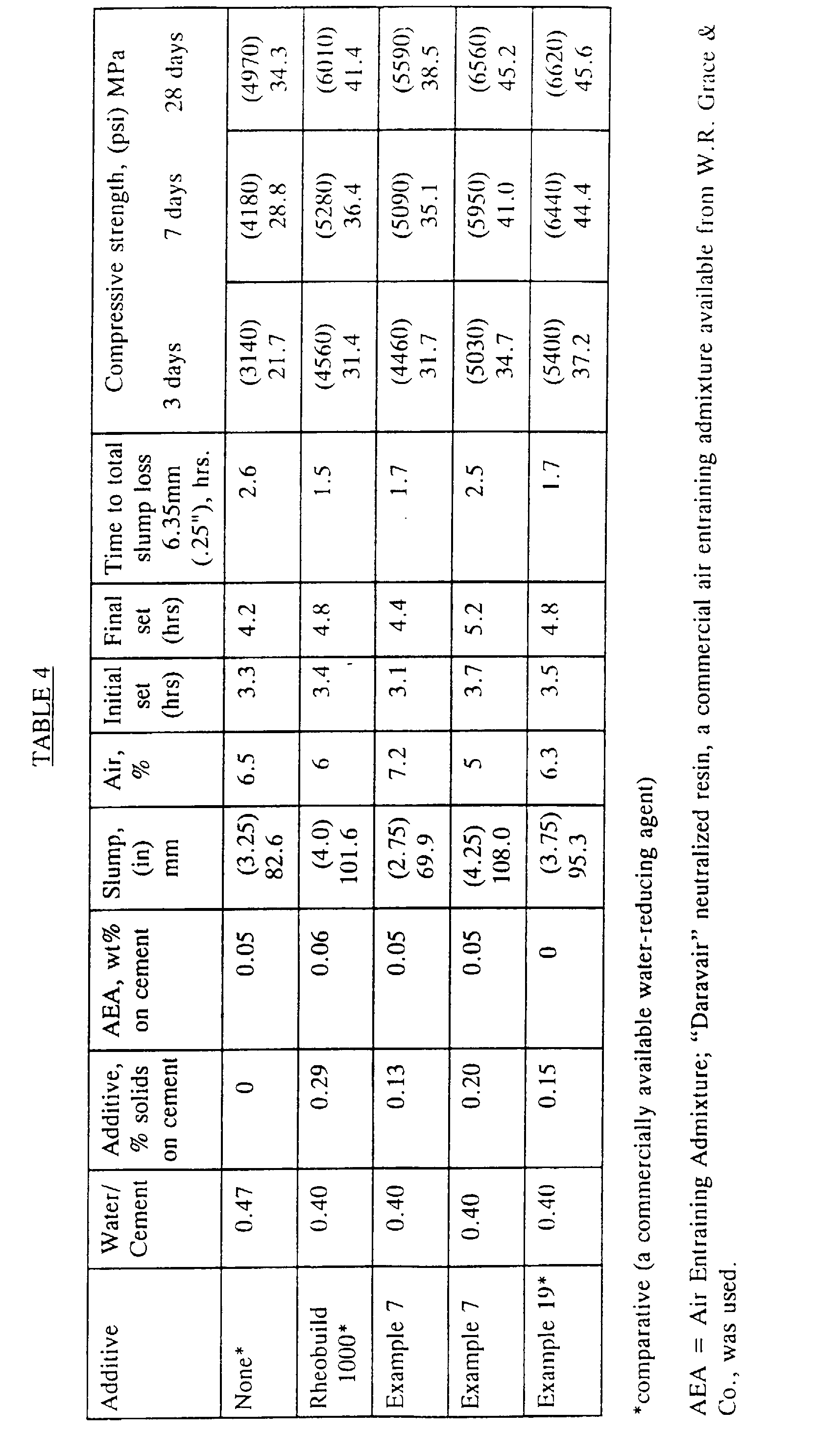

## Claims

1. A cement additive containing carboxylic acid groups obtainable by reaction of a carboxylic acid polymer comprised of, in polymerized form, a polymerizable acid monomer characterized by the presence of at least one ethylenically unsaturated group in conjugation with a carboxyl group selected from the group consisting of carboxylic acid, carboxylic anhydride and carboxylic ester groups, and a polyether comprised of, in polymerized form, a C₂-C₄ epoxide, under conditions effective to achieve partial cleavage of the polyether and esterification of the polyether and cleavage products thereof by the carboxylic acid polymer.

2. A cement additive as claimed in claim 1 characterised in that the C₂-C₄ epoxide is selected from the group consisting of ethylene oxide, propylene oxide, and mixtures thereof.

3. A cement additive as claimed in claim 1 or claim 2 characterised in that the polyether has a hydroxyl functionality of 1 or 2.

4. A cement additive as claimed in any one of claims 1 to 3 characterised in that the polyether has a number average molecular weight of from 200 to 10,000.

5. A cement additive as claimed in claim 1 characterised in that it is produced by reaction of (a) a carboxylic acid polymer prepared by polymerizing a polymerizable acid monomer containing at least one ethylenically unsaturated group in conjugation with a carboxyl group selected from the group consisting of carboxylic acid, carboxylic anhydride and carboxylic ester groups and (b) a polyether mixture comprising (i) a monofunctional polyether prepared by polymerizing a first epoxide selected from the group consisting of C₂-C₄ epoxides and mixtures thereof onto a monofunctional initiator and (ii) a difunctional polyether prepared by polymerizing a second epoxide selected from the group consisting of C₂-C₄ epoxides and mixtures thereof, which may be the same as or different from the first epoxide, onto a difunctional initiator, wherein (a) and (b) are reacted under conditions effective to achieve partial cleavage of the polyether mixture and esterification of the polyether mixture and cleavage products thereof by the carboxylic acid polymer.

6. A cement additive as claimed in claim 5 characterised in that the first epoxide is selected from the group consisting of ethylene oxide, propylene oxide, and mixtures thereof and the second epoxide is selected from the group consisting of ethylene oxide, propylene oxide, and mixtures thereof, which may be the same or different from the first epoxide.

7. A cement additive as claimed in claim 5 or claim 6 characterised in that the second epoxide is propylene oxide.

8. A cement additive as claimed in claim 5, claim 6 or claim 7 characterised in that the first epoxide is a mixture of ethylene oxide and propylene oxide.

9. A cement additive as claimed in any one of claims 5 to 7 the monofunctional polyether has a number average molecular weight of from 500 to 20,000 and the difunctional polyether has a number average molecular weight of from 200 to 20,000.

10. A cement additive as claimed in any one of claims 5 to 9 characterised in that the weight ratio of monofunctional polyether to difunctional polyether is from 3:1 to 25:1.

11. A cement additive as claimed in any one of claims 5 to 10 characterised in that the polymerizable acid monomer comprises acrylic acid, and (a) and (b) are reacted in the presence of an acid catalyst having a pKa of less than 0.

12. A cement additive as claimed in any one of the preceding claims characterised in that the acid monomer comprises at least 25 mole percent of the carboxylic acid polymer.

13. A cement additive as claimed in claim 12 characterised in that the carboxylic acid polymer consists essentially of the polymerizable acid monomer in polymerized form.

14. A cement additive as claimed in claim 13 characterised in that the carboxylic acid polymer is a homopolymer.

15. A cement additive as claimed in any one of the preceding claims characterised in that at least a portion of the carboxylic acid groups are in salt form.

16. A cement additive as claimed in any one of the preceding claims characterised in that the polymerizable acid monomer is selected from the group consisting of methyl acrylate, methyl methacrylate, maleic acid, maleic anhydride, and monomers having the structure 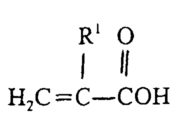 wherein R¹ is hydrogen or C₁-C₄ alkyl and mixtures thereof.

17. A cement additive as claimed in any one of the preceding claims characterised in that the carboxylic acid polymer has a number average molecular weight of from 500 to 2,000,000.

18. A cement additive as claimed in any one of the preceding claims characterised in that the number average molecular weight of the carboxylic acid polymer is from 500 to 10,000.

19. A cement additive as claimed in any one of the preceding claims characterised in that the equivalent ratio of carboxyl groups in the carboxylic acid polymer to hydroxyl groups in the polyether is from 20:1 to 2:1.

20. A method for producing a cement additive containing carboxylic acid groups comprising reacting a carboxylic acid polymer comprised of, in polymerized form, a polymerizable acid monomer characterized by the presence of at least one ethylenically unsaturated group in conjugation with a carboxyl group selected from the group consisting of carboxylic acid, carboxylic anhydride, and carboxylic ester groups and a polyether comprised of, in polymerized form, a C₂-C₄ epoxide, in the presence of a strong protic acid catalyst for a time and at a temperature effective to achieve partial cleavage of the polyether and esterification of the polyether and cleavage products thereof by the carboxylic acid polymer to form the cement additive.

21. A method as claimed in claim 20 comprising reacting
(a) a carboxylic acid polymer prepared by polymerizing a polymerizable acid monomer containing at least one ethylenically unsaturated group in conjugation with a carboxyl group selected from the group consisting of carboxylic acid, carboxylic anhydride and carboxylic ester groups; and
(b) a polyether mixture comprising
(i) a monofunctional polyether prepared by polymerizing a first epoxide selected from the group consisting of C₂-C₄ epoxides and mixtures thereof onto a monofunctional initiator; and
(ii) a difunctional polyether prepared by polymerizing a second epoxide selected from the group consisting of C₂-C₄ epoxides and mixtures thereof, which may be the same as or different from the first epoxide, onto a difunctional initiator;
in the presence of an acid catalyst having a pKa of less than 0 at a temperature effective to achieve partial cleavage of the polyether mixture and esterification of the polyether mixture and cleavage products thereof by the carboxylic acid polymer.

22. A method as claimed in claim 20 or claim 21 characterised in that the acid catalyst is selected from the group consisting of arylsulfonic acids, alkyl sulfonic acids, sulfonic acid ion exchange resins, and salts thereof.

23. A method as claimed in any one of claims 20 to 22 characterised in that the temperature is greater than 140°C.

24. A method as claimed in any one of claims 20 to 23 characterised in that it comprises the additional step of converting at least a portion of the carboxylic acid groups to the salt form.

25. A method as claimed in any one of claims 20 to 24 characterised in that the equivalent ratio of carboxyl groups in the carboxylic acid polymer to hydroxyl groups in the polyether is from 20:1 to 2:1.

26. A method as claimed in any one of claims 20 to 25 characterised in that the polymerizable acid monomer has the structure 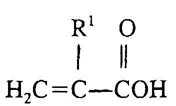 wherein R¹ is hydrogen or C₁-C₄ alkyl.

27. A cement composition comprised of cement and a cement additive as claimed in any one of claims 1 to 19 or obtained by a method as claimed in any one of claims 20 to 26.

28. A cement composition as claimed in claim 27 characterised in that it contains from 0.05 to 2% by weight, based on the dry weight of cement, of the cement additive.

29. A cement composition as claimed in claim 27 or claim 28, additionally comprising water.

30. A cement composition as claimed in claim 27, claim 28 or claim 29 additionally comprising aggregate.

31. A method of increasing the fluidity of a hydraulic cement composition comprising adding to the hydraulic cement composition from 0.01 to 10% by weight based on the weight of dry cement of a cement additive as claimed in any one of claims 1 to 19 or obtained by a method as claimed in any one of claims 20 to 26.

## Patentansprüche

1. Zementadditiv enthaltend Carbonsäuregruppen, erhältlich durch Umsetzung eines Carbonsäurepolymeren, umfassend in polymerisierter Form ein polymerisierbares Säuremonomer, gekennzeichnet durch die Anwesenheit mindestens einer ethylenisch ungesättigten Gruppe in Verbindung mit einer Carboxylgruppe, ausgewählt aus der Gruppe bestehend aus Carbonsäure, Carbonsäureanhydrid und Carbonsäureestergruppen, mit einem Polyether, umfassend in polymerisierter Form ein C₂-C₄-Epoxid, unter Bedingungen, die geeignet sind, eine teilweise Spaltung des Polyethers und eine Veresterung des Polyethers und seiner Spaltprodukte durch das Carbonsäurepolymer zu bewirken.

2. Zementadditiv nach Anspruch 1, dadurch gekennzeichnet, daß das C₂-C₄-Epoxid aus der Gruppe bestehend aus Ethylenoxid, Propylenoxid und deren Gemische ausgewählt ist.

3. Zementadditiv nach Anspruch 1 oder Anspruch 2, dadurch gekennzeichnet, daß der Polyether eine Hydroxylzahl von 1 oder 2 hat.

4. Zementadditiv nach einem der Ansprüche 1 bis 3, dadurch gekennzeichnet, daß der Polyether ein Molekulargewichtszahlenmittel von 200 bis 10 000 hat.

5. Zementadditiv nach Anspruch 1, dadurch gekennzeichnet, daß es hergestellt wird durch Umsetzung eines (a) Carbonsäurepolymeren, hergestellt durch Polymerisation eines polymerisierbaren Säuremonomeren, enthaltend mindestens eine ethylenisch ungesättigte Gruppe in Verbindung mit einer Carboxylgruppe, ausgewählt aus der Gruppe bestehend aus Carbonsäure, Carbonsäureanhydrid und Carbonsäureestergruppen mit (b) einem Polyethergemisch, umfassend (i) einen monofunktionellen Polyether, hergestellt durch Polymerisation eines ersten Epoxids, ausgewählt aus der Gruppe bestehend aus C₂-C₄-Epoxiden und deren Gemischen in Anwesenheit eines monofunktionellen Initiators und ii) einen difunktionellen Polyether, hergestellt durch Polymerisation eines zweiten Epoxids, ausgewählt aus der Gruppe bestehend aus C₂-C₄-Epoxiden und deren Gemische, die gleich oder vom ersten Epoxid verschieden sein können, in Anwesenheit eines difunktionellen Initiators, wobei (a) und (b) unter Bedingungen zur Umsetzung gebracht werden, die geeignet sind, eine teilweise Spaltung des Polyethergemisches und Veresterung des Polyethergemisches und dessen Spaltprodukte durch das Carbonsäurepolymer zu erzielen.

6. Zementadditiv nach Anspruch 5, dadurch gekennzeichnet, daß das erste Epoxid aus der Gruppe ausgewählt wird, bestehend aus Ethylenoxid, Propylenoxid und deren Gemische und das zweite Epoxid aus der Gruppe ausgewählt wird, bestehend aus Ethylenoxid, Propylenoxid und deren Gemische, die gleich oder verschieden vom ersten Epoxid sein können.

7. Zementadditiv nach Anspruch 5 oder Anspruch 6, dadurch gekennzeichnet, daß das zweite Epoxid Propylenoxid ist.

8. Zementadditiv nach Anspruch 5, Anspruch 6 oder Anspruch 7, dadurch gekennzeichnet, daß das erste Epoxid ein Gemisch aus Ethylenoxid und Propylenoxid ist.

9. Zementadditiv nach einem der Ansprüche 5 bis 7, wobei der monofunktionelle Polyether ein Molekulargewichtszahlenmittel von 500 bis 20 000 und der difunktionelle Polyether ein Molekulargewichtszahlenmittel von 200 bis 20 000 aufweist.

10. Zementadditiv nach einem der Ansprüche 5 bis 9, dadurch gekennzeichnet, daß das Gewichtsverhältnis des monofunktionellen Polyethers zum difunktionellen Polyether 3 : 1 bis 25 : 1 beträgt.

11. Zementadditiv nach einem der Ansprüche 5 bis 10, dadurch gekennzeichnet, daß das polymerisierbare Säuremonomer Acrylsäure umfaßt, und (a) und (b) in Anwesenheit eines sauren Katalysators mit einem pKa von weniger als 0 zur Umsetzung gebracht werden.

12. Zementadditiv nach einem der vorstehenden Ansprüche, dadurch gekennzeichnet, daß das Säuremonomer mindestens 25 Mol-% des Carbonsäurepolymeren umfaßt.

13. Zementadditiv nach Anspruch 12, dadurch gekennzeichnet, daß das Carbonsäurepolymer im wesentlichen aus dem polymerisierbaren Säuremonomer in polymerisierter Form besteht.

14. Zementadditiv nach Anspruch 13, dadurch gekennzeichnet, daß das Carbonsäurepolymer ein Homopolymer ist.

15. Zementadditiv nach einem der vorstehenden Ansprüche, dadurch gekennzeichnet, daß mindestens ein Teil der Carbonsäuregruppen in Salzform vorliegen.

16. Zementadditiv nach einem der vorstehenden Ansprüche, dadurch gekennzeichnet, daß das polymerisierbare Säuremonomer ausgewählt ist aus der Gruppe bestehend aus Methylacrylat, Methylmethacrylat, Maleinsäure, Maleinsäureanhydrid und Monomeren der Struktur 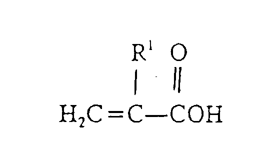 in der R¹ Wasserstoff oder C₁-C₄-Alkyl und deren Gemische bedeutet.

17. Zementadditiv nach einem der vorstehenden Ansprüche, dadurch gekennzeichnet, daß das Carbonsäurepolymer ein zahlenmittleres Molekulargewicht von 500 bis 2 000 000 aufweist.

18. Zementadditiv nach einem der vorstehenden Ansprüche, dadurch gekennzeichnet, daß das Carbonsäurepolymer ein Molekulargewichtszahlenmittel von 500 bis 10 000 aufweist.

19. Zementadditiv nach einem der vorstehenden Ansprüche, dadurch gekennzeichnet, daß das Äquivalentverhältnis der Carboxylgruppen im Carbonsäurepolymer zu den Hydroxylgruppen im Polyether 20 : 1 bis 2 : 1 beträgt.

20. Verfahren zur Herstellung eines Carbonsäuregruppen enthaltenden Zementadditivs, bei dem man ein Carbonsäurepolymer, umfassend in polymerisierter Form ein polymerisierbares Säuremonomer, dadurch gekennzeichnet, daß mindestens eine ethylenisch ungesättigte Gruppe in Verbindung mit einer Carbonsäuregruppe vorhanden ist, ausgewählt aus der Gruppe bestehend aus Carbonsäure, Carbonsäureanhydrid und Carbonsäureestergruppen mit einem Polyether, umfassend in polymerisierbarer Form ein C2-C4-Epoxid, in Gegenwart eines starken protischen sauren Katalysators während einer Zeitdauer und einer Temperatur, die ausreicht, um eine partielle Spaltung des Polyethers und Veresterung des Polyethers und seiner Spaltprodukte durch das Carbonsäurepolymer unter Bildung des Zementadditivs zu erreichen, zur Umsetzung bringt.

21. Verfahren nach Anspruch 20, umfassend die Umsetzung
(a) eines Carbonsäurepolymeren, hergestellt durch Polymerisation eines polymerisierbaren Säuremonomeren, enthaltend mindestens eine ethylenisch ungesättigte Gruppe in Verbindung mit einer Carbonsäuregruppe, ausgewählt aus der Gruppe bestehend aus Carbonsäure, Carbonsäureanhydrid und Carbonsäureestergruppen; und
(b) einem Polyethergemisch, umfassend
(i) einen monofunktionellen Polyether, hergestellt durch Polymerisation eines ersten Epoxids, ausgewählt aus der Gruppe bestehend aus C₂-C₄-Epoxiden und deren Gemischen in Anwesenheit eines monofunktionellen Initiators;
und
(ii) einen difunktionellen Polyether, hergestellt durch Polymerisation eines zweiten Epoxids, ausgewählt aus der Gruppe bestehend aus C₂-C₄-Epoxiden und deren Gemisch, die gleich oder vom ersten Epoxid verschieden sein können, mit einem difunktionellen Initiator;
in Gegenwart eines sauren Katalysators mit einem pKa von weniger als 0 bei einer Temperatur, die ausreicht, um eine teilweise Spaltung des Polyethergemisches und Veresterung des Polyethergemisches und dessen Spaltprodukte durch das Carbonsäurepolymer zu erzielen.

22. Verfahren nach Anspruch 20 oder Anspruch 21, dadurch gekennzeichnet, daß der saure Katalysator ausgewählt wird aus der Gruppe bestehend aus Arylsulfonsäuren, Alkylsulfonsäuren, Sulfonsäureionenaustaucherharze und deren Salze.

23. Verfahren nach einem der Ansprüche 20 bis 22, dadurch gekennzeichnet, daß die Temperatur mehr als 140 °C beträgt.

24. Verfahren nach einem der Ansprüche 20 bis 23, dadurch gekennzeichnet, daß es den zusätzlichen Schritt der Umwandlung mindestens eines Teils der Carbonsäuregruppen in die Salzform umfaßt.

25. Verfahren nach einem der Ansprüche 20 bis 24, dadurch gekennzeichnet, daß das Äquivalenzverhältnis der Carbonsäuregruppen in dem Carbonsäurepolymeren zu Hydroxylgruppen im Polyether 20 : 1 bis 2 : 1 beträgt.

26. Verfahren nach einem der Ansprüche 20 bis 25, dadurch gekennzeichnet, daß das polymerisierbare saure Monomer die Struktur 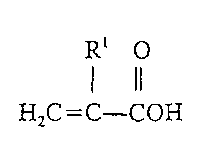 aufweist, wobei R¹ Wasserstoff oder C₁-C₄-Alkyl bedeutet.

27. Zementzusammensetzung umfassend Zement und ein Zementadditiv nach einem der Ansprüche 1 bis 19 oder erhalten nach einem Verfahren nach einem der Ansprüche 20 bis 26.

28. Zementzusammensetzung nach Anspruch 27, dadurch gekennzeichnet, daß sie 0,05 bis 2 Gew.-%, bezogen auf das Trockengewicht des Zements, Zementadditiv enthält.

29. Zementzusammensetzung nach Anspruch 27 und Anspruch 28, die zusätzlich Wasser umfaßt.

30. Zementzusammensetzung nach Anspruch 27, Anspruch 28 oder Anspruch 29, die zusätzlich Aggregat umfaßt.

31. Verfahren zur Erhöhung der Fließfähigkeit einer hydraulischen Zementzusammensetzung, bei der man der hydraulischen Zementzusammensetzung 0,01 bis 10 Gew.-%, bezogen auf den trockenen Zement, ein Zementadditiv nach einem der Ansprüche 1 bis 19 oder erhalten nach einem Verfahren gemäß einem der Ansprüche 20 bis 26 zusetzt.

## Revendications

1. Additif pour ciment contenant des groupes d'acide carboxylique pouvant être obtenus par réaction d'un polymère d'acide carboxylique constitué, dans la forme polymérisée, d'un monomère d'acide polymérisable, caractérisé par la présence d'au moins un groupe insaturé éthyléniquement en conjugaison avec un groupe carboxyle choisi dans le groupe constitué par l'acide carboxylique, de l'anhydride carboxylique et des groupes d'esters carboxyliques, et d'un polyéther constitué, dans la forme polymérisée, d'un époxyde C₂-C₄, dans des conditions efficaces pour réaliser un clivage partiel du polyéther et l'estérification du polyéther et de ses produits de clivage par le polymère de l'acide carboxylique.

2. Additif pour ciment selon la revendication 1, caractérisé en ce que l'époxyde C₂-C₄ est choisi dans le groupe constitué par l'oxyde d'éthylène, l'oxyde de propylène et leurs mélanges.

3. Additif pour ciment selon la revendication 1 ou la revendication 2, caractérisé en ce que le polyéther a une fonctionnalité hydroxyle de 1 ou 2.

4. Additif pour ciment selon l'une quelconque des revendications 1 à 3, caractérisé en ce que le polyéther a un poids moléculaire moyen en nombre de 200 à 10000.

5. Additif pour ciment selon la revendication 1, caractérisé en ce qu'il est produit par la réaction (a) d'un polymère de l'acide carboxylique préparé par polymérisation d'un monomère de l'acide polymérisable contenant au moins un groupe insaturé éthyléniquement en conjugaison avec un groupe carboxyle choisi dans le groupe constitué par l'acide carboxylique, l'anhydride carboxylique, et les groupes d'esters carboxyliques et (b) un mélange de polyéther comprenant (i) un polyéther monofonctionnel préparé par polymérisation d'un premier époxyde choisi dans le groupe constitué par des époxydes C₂-C₄ et leurs mélanges sur un amorceur monofonctionnel et (ii) un polyéther difonctionnel préparé par polymérisation d'un second époxyde choisi dans le groupe constitué par des époxydes C₂-C₄ et leurs mélanges, pouvant être identiques ou différents au premier époxyde, sur un amorceur difonctionnel, (a) et (b) étant mis en réaction dans des conditions efficaces pour réaliser un clivage partiel du mélange de polyéther et l'estérification du mélange de polyéther et de ses produits de clivage par le polymère de l'acide carboxylique.

6. Additif pour ciment selon la revendication 5, caractérisé en ce que le premier époxyde est choisi dans le groupe constitué par l'oxyde d'éthylène, l'oxyde de propylène et leurs mélanges et le second époxyde est choisi dans le groupe constitué par l'oxyde d'éthylène, l'oxyde de propylène et leurs mélanges qui peuvent être identiques ou différents du premier époxyde.

7. Additif pour ciment selon la revendication 5 ou la revendication 6, caractérisé en ce que le second époxyde est l'oxyde de propylène.

8. Additif pour ciment selon la revendication 5, 6 ou 7, caractérisé en ce que le premier époxyde est un mélange d'oxyde d'éthylène et d'oxyde de propylène.

9. Additif pour ciment selon l'une quelconque des revendications 5 à 7, le polyéther monofonctionnel ayant un poids moléculaire moyen en nombre de 500 à 20000 et le polyéther difonctionnel ayant un poids moléculaire en nombre de 200 à 20000.

10. Additif pour ciment selon l'une quelconque des revendications 5 à 9, caractérisé en ce que le rapport pondéral entre le polyéther monofonctionnel et le polyéther difonctionnel est de 3:1 à 25:1.

11. Additif pour ciment selon l'une quelconque des revendications 5 à 10, caractérisé en ce que le monomère de l'acide polymérisable comprend l'acide acrylique, et (a) et (b) sont mis en réaction en présence d'un catalyseur acide ayant un pKa inférieur à 0.

12. Additif pour ciment selon l'une quelconque des revendications précédentes, caractérisé en ce que le monomère acide comprend au moins 25% en mole du polymère de l'acide carboxylique.

13. Additif pour ciment selon la revendication 12, caractérisé en ce que le polymère de l'acide carboxylique consiste essentiellement en monomère acide polymérisable dans la forme polymérisée.

14. Additif pour ciment selon la revendication 13, caractérisé en ce que le polymère de l'acide carboxylique est un homopolymère.

15. Additif pour ciment selon l'une quelconque des revendications précédentes, caractérisé en ce qu'au moins une portion des groupes de l'acide carboxylique est sous forme de sel.

16. Additif pour ciment selon l'une quelconque des revendications précédentes, caractérisé en ce que le monomère acide polymérisable est choisi dans le groupe constitué par l'acrylate de méthyle, le méthacrylate de méthyle, l'acide maléique, l'anhydride maléique, et des monomères ayant la structure 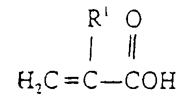 dans laquelle R¹ est l'hydrogène ou alkyle C₁-C₄ et leurs mélanges.

17. Additif pour ciment selon l'une quelconque des revendications précédentes, caractérisé en ce que le polymère de l'acide carboxylique a un poids moléculaire en nombre de 500 à 2000000.

18. Additif pour ciment selon l'une quelconque des revendications précédentes, caractérisé en ce que le poids moléculaire moyen en nombre du polymère de l'acide carboxylique est de 500 à 10000.

19. Additif pour ciment selon l'une quelconque des revendications précédentes, caractérisé en ce que le rapport équivalent entre les groupes carboxyle dans le polymère de l'acide carboxylique et les groupes hydroxyle dans polymère est de 20:1 à 2:1.

20. Procédé pour la production d'un additif pour ciment contenant des groupes de l'acide carboxylique comprenant la mise en réaction d'un polymère de d'acide carboxylique constitué, dans la forme polymérisée, d'un monomère acide polymérisable, caractérisé par la présence d'au moins un groupe insaturé éthyléniquement en conjugaison avec un groupe carboxyle choisi dans le groupe constitué par l'acide carboxylique, l'anhydride carboxylique et des groupes de l'ester carboxylique et un polyéther constitué, dans la forme polymérisée, d'un époxyde C₂-C₄ en présence d'un catalyseur d'acide protique fort pendant une durée et à une température efficaces pour obtenir un clivage partiel du polyéther et l'estérification du polyéther et de ses produits de composition par le polymère de l'acide carboxylique pour former l'additif pour ciment.

21. Procédé selon la revendication 20, comprenant la mise en réaction
(a) d'un polymère de l'acide carboxylique préparé par polymérisation d'un monomère de l'acide polymérisable contenant au moins un groupe insaturé éthyléniquement en conjugaison avec un groupe carboxyle choisi dans le groupe constitué par l'acide carboxylique, l'anhydride carboxylique et des groupes d'esters carboxyliques ; et
(b) un mélange polyéther comprenant
(i) un polyéther monofonctionnel préparé par polymérisation d'un premier époxyde choisi dans le groupe constitué par des époxydes C₂-C₄ et leurs mélanges sur un amorceur monofonctionnel ; et
(ii) un polyéther difonctionnel préparé par polymérisation d'un second époxyde choisi dans le groupe constitué par des époxydes C₂-C₄ et leurs mélanges qui peuvent être identiques ou différents du premier époxyde sur un amorceur difonctionnel ;
en présence d'un catalyseur acide ayant un pKa inférieur à 0 à une température efficace pour obtenir un clivage partiel du mélange de polyéther et l'estérification du mélange de polyéther et de ses produits de composition par le polyéther de l'acide carboxylique.

22. Procédé selon la revendication 20 ou 21, caractérisé en ce que le catalyseur acide est choisi dans le groupe constitué par des acides arylsulfoniques, les acides alkylsufonique, les résines échangeuses d'ions de l'acide sulfonique et leurs sels.

23. Procédé selon l'une quelconque des revendications 10 à 22, caractérisé en ce que la température est supérieure à 140°C.

24. Procédé selon l'une quelconque des revendications 20 à 23, caractérisé en ce qu'il comprend l'étape supplémentaire consistant à convertir au moins une partie des groupes de l'acide carboxylique en la forme sel.

25. Procédé selon l'une quelconque des revendications 20 à 24, caractérisé en ce que le rapport équivalent entre les groupes carboxyle dans le polymère de l'acide carboxylique et les groupes hydroxyle dans le polyéther est de 20:1 à 2:1.

26. Procédé selon l'une quelconque des revendications 20 à 25, caractérisé en ce que le monomère de l'acide polymérisable a la structure 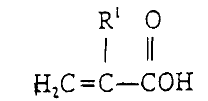 dans laquelle R¹ est l'hydrogène ou alkyle C₁-C₄.

27. Composition de ciment constituée de ciment et d'un additif pour ciment selon l'une quelconque des revendications 1 à 19 ou obtenu par un procédé selon l'une quelconque des revendications 20 à 26.

28. Composition de ciment selon la revendication 27, caractérisée en ce qu'elle contient de 0,05 à 2% en poids, rapportés au poids à sec du ciment, de l'additif pour ciment.

29. Composition de ciment selon la revendication 27 ou la revendication 28, comprenant de plus de l'eau.

30. Composition de ciment selon la revendication 27, 28 ou 29 comprenant de plus un agrégat.

31. Procédé pour augmenter la fluidité d'une composition de ciment hydraulique comprenant l'addition à la composition de ciment hydraulique de 0,01 à 10% en poids rapportés au poids de ciment à sec d'un additif pour ciment selon l'une quelconque des revendications 1 à 19 ou obtenu par un procédé selon l'une quelconque des revendications 20 à 26.
